# EUROPÄISCHE PATENTSCHRIFT

(11) **EP 3 233 551 B1**
(45) Veröffentlichungstag und Bekanntmachung des Hinweises auf die Patenterteilung: **26.08.2020**
(21) Anmeldenummer: 15800860.7
(22) Anmeldetag: 26.11.2015
(51) Int. Cl.: B60J 10/70, B60J 1/00

(54) **POLYMERE SCHEIBE MIT ANEXTRUDIERTEM DICHTUNGSPROFIL**
POLYMER WINDOW WITH EXTRUDED SEALING PROFILE
VITRE EN POLYMÈRE AYANT UN PROFIL D'ÉTANCHÉITÉ EXTRUDÉ

(30) Priorität: 18.12.2014 EP 14198806
(43) Veröffentlichungstag der Anmeldung: 25.10.2017
(73) Patentinhaber: SAINT-GOBAIN GLASS FRANCE, 92400 Courbevoie (FR)
(72) Erfinder: LUX, Thomas, 71554 Weissach im Tal (DE); SCHMIDT, Sebastian, 70176 Stuttgart (DE); WEISSENBERGER, Uwe, 97078 Würzburg (DE); BUMANN, Stefan, 52156 Monschau (DE)
(74) Vertreter: Gebauer, Dieter Edmund
(86) Internationale Anmeldenummer: PCT/EP2015/077740
(87) Internationale Veröffentlichungsnummer: WO 2016/096362

(56) Entgegenhaltungen:
- WO-A1-2008/134771
- DE-A1-102004 058 265
- JP-A- 2000 071 380

## Beschreibung

Die Erfindung betrifft eine polymere Scheibe, ein Verfahren zur Herstellung einer solchen Scheibe und deren Verwendung.

Es sind verschiedene Verfahren bekannt, um Scheiben mit einem Profilstrang aus Kunststoff, zum Beispiel einem thermoplastischen Elastomer, zu versehen. Im Fall von Fahrzeugscheiben werden diese Einfassungen aus Kunststoff zur Abdichtung und / oder Befestigung von Fahrzeugscheiben in den Fensteröffnungen genutzt.

Im Zuge immer strengerer Vorgaben zur Kohlendioxidemission von Kraftfahrzeugen gibt es starke Bestrebungen, das Gewicht eines Fahrzeugs und damit dessen Treibstoffverbrauch zu senken. Im Zuge stetiger Weiterentwicklungen im Bereich der Kunststoffe können im gesamten Fensterbereich Elemente aus polymeren Werkstoffen eingesetzt werden. Auf Grund der Gewichtsreduzierung verlagert sich der Schwerpunkt des Fahrzeugs weiter nach unten, was einen positiven Einfluss auf das Fahrverhalten hat.

Damit Scheiben aus polymeren Werkstoffen im Hinblick auf Kratzfestigkeit vergleichbare Eigenschaften haben wie Scheiben aus Glas, werden diese mit einer Schutzbeschichtung, einem sogenannten Hardcoat versehen. Diese Schutzschicht verändert die Oberflächeneigenschaften der Scheibe, sodass Standardverfahren, die zur Verklebung von anzubringenden Dichtungen mit Scheiben aus Glas eingesetzt werden, für beschichtete polymere Scheiben oft ungeeignet sind.

Die Einfassung von polymeren Scheiben mit Profilsträngen aus Kunststoff, wie zum Beispiel mit einem thermoplastischen Elastomer, erfolgt typischer Weise über das Spritzgussverfahren. Dabei wird zunächst ein Haftvermittler oder Primer an der Stelle der polymeren Scheibe appliziert, an der sich später der Profilstrang befinden soll, der Primer wird aktiviert zum Beispiel durch Erhitzen, die polymere Scheibe wird in ein Formwerkzeug gelegt, ein thermoplastisches Elastomer wird auf den Primer / Haftvermittler injiziert und die Scheibe wird aus dem Formwerkzeug entnommen.

In der EP 2 144 958 B1 ist ein entsprechendes Verfahren zur Herstellung von Kunststoffverglasungen mit einem Profilstrang beschrieben. Dabei wird zunächst eine Kunststoffplatte bereitgestellt, die anschließend in eine Form eingelegt wird, in die dann das Material des Profilstrangs eingespritzt wird. Anschließend wird die Kunststoffplatte mit Profilstrang aus der Form entnommen. Ein Nachteil dieser Methode ist die Notwendigkeit, für jede neue geometrische Form einer Scheibe eine eigene kostenaufwändige Form herstellen zu müssen. Insbesondere bei kleinen Stückzahlen werden die Herstellungskosten pro Stück deutlich erhöht.

Die japanische Druckschrift JP 2000 071380 A zeigt eine Anordnung, bei der ein extrudiertes Profil an den Scheibenrand geklemmt wird.

Je nach der Art der auf den polymeren Scheiben angebrachten Schutzbeschichtung wird die Anwendung eines solchen Verfahrens erschwert, da auf Grund der veränderten Oberfläche die gewöhnlich verwendeten Primer diese nicht hinreichend gut benetzen und somit keine geeigneten Haftbedingungen zwischen der Oberfläche und dem Primer erzielt werden können. Dieses Problem tritt zum Beispiel bei der Verwendung von Polysiloxan-haltigen Schutzbeschichtungen auf. Daher muss die Schutzbeschichtung in den zu beschichtenden Bereichen zuvor entfernt werden. Dies erfolgt durch Fräsen oder Abschleifen der Schutzbeschichtung, was sehr zeitaufwändig ist und somit zu einer verringerten Produktivität führt. Beim Abschleifen entsteht zudem zusätzlicher Abfall und Lärm durch den Schleifprozess, was mit Hinblick auf Umweltschutz und Arbeitsschutz nachteilhaft ist. Damit die injizierten thermoplastischen Elastomere für den Profilstrang auf der abgeschliffenen Oberfläche der polymeren Scheibe gut haften, werden oft spezielle haftmodifizierte, thermoplastische Elastomersysteme verwendet, um eine ausreichende Benetzung zu erzielen. Diese Systeme können sehr kostenaufwändig sein.

Eine Aufgabe der vorliegenden Erfindung ist es, eine mit einem Dichtungsprofil versehene verbesserte polymere Scheibe herzustellen, die einfach und kostengünstig hergestellt werden kann. Eine weitere Aufgabe der vorliegenden Erfindung ist es, ein verbessertes Verfahren zur Herstellung einer erfindungsgemäßen polymeren Scheibe zur Verfügung zu stellen.

Die Aufgabe der vorliegenden Erfindung wird durch eine erfindungsgemäße polymere Scheibe nach Anspruch 1 gelöst. Die erfindungsgemäße polymere Scheibe umfasst mindestens einen polymeren Grundkörper mit einer ersten Scheibenfläche, einer zweiten Scheibenfläche, einer umlaufenden Scheibenkante und einer Schutzbeschichtung auf der gesamten zweiten Scheibenfläche und auf mindestens einem Teil der ersten Scheibenfläche, wobei mindestens auf der Seite der ersten Scheibenfläche ein anextrudiertes Dichtungsprofil über einen Haftvermittler angebracht ist.

Die zweite Scheibenfläche ist auf ihrer gesamten Fläche mit Schutzbeschichtung versehen und daher vollständig vor mechanischer Beschädigung wie Verkratzen geschützt. Sie ist somit besonders geeignet nach Einbau in eine dafür vorgesehene Öffnung zu der Seite zu weisen, die den größten mechanischen Belastungen ausgesetzt ist. Bei einer Verwendung der polymeren Scheibe als Fahrzeugscheibe weist die zweite Scheibenfläche demnach zur Außenseite, während die erste Scheibenfläche zum Fahrzeuginnenraum weist. Auf der ersten Scheibenfläche wird der Haftvermittler aufgetragen und das Dichtungsprofil anextrudiert. Anextrudiert im Sinne der Erfindung bedeutet, dass das Dichtungsprofil in situ auf den Haftvermittler aufgebracht wird, im Gegensatz zu einem fertig extrudierten Bauteil, das nachträglich auf die Scheibe geklebt wird. Durch die direkte Extrusion auf die polymere Scheibe wird eine besonders feste und dauerhaft stabile Verbindung zur polymeren Scheibe hergestellt. Zudem entfällt die Notwendigkeit der Entfernung der Schutzschicht und des Einsatzes spezieller haftmodifizierter, thermoplastischer Elastomere für die Extrusion des Dichtungsprofils, da dank der direkten Extrusion auf die polymere Scheibe ebenfalls eine stabile Verbindung hergestellt wird. Dies war für den Fachmann überraschend und unerwartet.

Die polymere Scheibe im Sinne der Erfindung ist ein flaches oder gewölbtes Werkstück aus Kunststoff, das zumindest bereichsweise transparent ist. Der polymere Grundkörper kann farblos, gefärbt oder getönt sein. Der polymere Grundkörper kann klar oder trüb sein. Die von der Ausdehnung her größten Flächen des polymeren Grundkörpers werden als die erste und zweite Scheibenfläche bezeichnet. Dies sind die Flächen der polymeren Scheibe, durch die ein Betrachter schauen würde. Nach Einbau in eine Öffnung trennt die Scheibe einen Innen- und einen Außenraum voneinander, zum Beispiel einen Fahrzeuginnenraum und einen Fahrzeugaußenraum. Die erste Scheibenfläche weist dann erfindungsgemäß zum Innenraum und die zweite Scheibenfläche zum Außenraum. Die Scheibenkante begrenzt die polymere Scheibe nach außen. Die polymere Scheibe kann verschiedene geometrische Formen annehmen, zum Beispiel rechteckig, quadratisch, halbkreisförmig, kreisförmig oder oval ausgeführt sein.

Transparent bedeutet, dass ein Betrachter, der durch diesen Bereich hindurchschaut, Objekte, die vom Betrachter aus hinter der polymeren Scheibe angeordnet sind, erkennen kann. Der transparente Bereich kann farblos sein. Der transparente Bereich kann auch gefärbt oder getönt sein. Der Transmissionsgrad des transparenten Bereichs im sichtbaren Spektralbereich (300 nm - 800 nm) liegt dabei bei mindestens 5%.

Das Dichtungsprofil dient zur Fixierung der polymeren Scheibe in einer Öffnung, zum Beispiel in einer Fensteröffnung, wobei die Scheibe so angebracht werden kann, dass die Öffnung zum Beispiel gegen das Eindringen von Feuchtigkeit abgedichtet ist. Die Fixierung einer polymeren Scheibe in einer Fensteröffnung mit Hilfe eines Dichtungsprofils ist üblich. Die Vorbereitung einer polymeren Scheibe mit einem mindestens teilweise umlaufenden Dichtungsprofil erleichtert den späteren Einbau in die dafür vorgesehene Öffnung.

Das Dichtungsprofil ist über einen Haftvermittler (Primer) angebracht. Die Industrie stellt hierfür ein breites Sortiment an ein- und zweikomponentigen Primersystemen bereit. Da das Dichtungsprofil in situ anextrudiert wird, können überraschenderweise Haftvermittler eingesetzt werden, die auch für Glasscheiben verwendet werden. Der Haftvermittler kann wässrige oder organische Lösungsmittel enthalten. Der Haftvermittler kann farblos, klar, opak oder fluoreszierend sein. Bevorzugt enthält der Haftvermittler Polyurethane, Epoxidharze und / oder chlorierte Polyolefine, zum Beispiel chlorierte Polypropylene.

Das Dichtungsprofil ist bevorzugt parallel zur Scheibenkante angebracht und der Abstand a des Dichtungsprofils zur Scheibenkante ist kleiner als 5 cm, bevorzugt kleiner als 2 cm, besonders bevorzugt kleiner als 0,5 cm. In dieser Anordnung wird eine gute Abdichtung bei geringem Materialverbrauch erzielt. Der Abstand a des Dichtungsprofils zur Scheibenkante meint den Abstand zwischen der Scheibenkante und dem Bereich des Dichtungsprofils, das in Kontakt mit dem Haftvermittler steht.

In einer bevorzugten Ausführungsform sind der Haftvermittler und das extrudierte Dichtungsprofil umlaufend entlang der gesamten Scheibenkante angebracht. In dem Fall ist der gesamte Umfang der Scheibe mit einem extrudierten Dichtungsprofil versehen, wodurch die Scheibe vollständig dicht eingebaut ist.

In einer alternativen Ausführungsform sind der Haftvermittler und das extrudierte Dichtungsprofil nur entlang eines Teils der Scheibenkante angebracht. So kann Material gespart werden.

In einer bevorzugten Ausführungsform ist das extrudierte Dichtungsprofil so angebracht, dass es über die Scheibenkante hinausragt. Wenn die polymere Scheibe in die vorgesehene Öffnung eingesetzt wird, kann der über die Scheibenkante hinausragende Teil des Dichtungsprofils sich teilweise um die Scheibenkante legen und sorgt so für eine perfekte Abdichtung.

In einer weiteren bevorzugten Ausführungsform ist das extrudierte Dichtungsprofil die Scheibenkante umgreifend auf der ersten Scheibenfläche und der zweiten Scheibenfläche angeordnet. Das Dichtungsprofil fasst die Scheibenkante ein und schützt die Scheibenkante vor Beschädigung vor, während und nach dem Einbau.

In einer bevorzugten Ausführungsform ist mindestens in einem Randbereich der Scheibe auf der ersten Scheibenfläche ein Schwarzdruck angebracht. Der Schwarzdruck ist dabei bevorzugt auf dem polymeren Grundkörper unter der Schutzbeschichtung angeordnet. Der Schwarzdruck dient dazu, Vorrichtungen, die auf der ersten Scheibenfläche angebracht sind, zu verdecken und so die optische Erscheinung der Scheibe zu verbessern. Für einen Betrachter, der auf die zweite Scheibenfläche schaut, werden diese Vorrichtungen durch den Schwarzdruck verborgen. Bei Fahrzeugscheiben kann ein Schwarzdruck zum Beispiel im Bereich von auf der Scheibe montierten Objekten angebracht sein, zum Beispiel Sensoren oder Kameras. Auch können so Drähte oder Kabel verborgen werden. An den Stellen, wo das Dichtungsprofil im Randbereich angeordnet ist, ist die Materialfolge von der ersten Scheibenfläche aus gesehen bis zum polymeren Grundkörper: Dichtungsprofil - Haftvermittler - Schutzbeschichtung - Schwarzdruck - polymerer Grundkörper. Der Randbereich der Scheibe grenzt an die Scheibenkante an. Der Schwarzdruck verdeckt dort den Blick auf die Fixierung der Scheibe durch Klebe- und Dichtmittel und / oder das Dichtungsprofil, das ebenfalls im Randbereich angeordnet sein kann. Der Schwarzdruck ist bevorzugt in einem Randbereich mit einer Breite von 1 cm bis 25 cm, bevorzugt 5 cm bis 10 cm angeordnet. Der Schwarzdruck kann über das Siebdruck- bzw. Offset-Verfahren oder über Sprühverfahren aufgebracht sein.

Erfindungsgemäß ist mindestens im Randbereich der Scheibe auf der ersten Scheibenfläche eine opake Materialphase angebracht. Diese opake Materialphase ist bevorzugt über ein 2-Komponenten-Spritzgießverfahren aufgebracht. Die opake Materialphase kann eine ähnliche Funktion übernehmen wie der Schwarzdruck. Durch die opake Ausführung werden hinter der opaken Materialphase liegende Objekte oder Bereiche verdeckt. Die opake Materialphase kann sich über 2% bis 70 % der ersten Scheibenfläche erstrecken. Opak bedeutet im Sinne der Erfindung, dass ein Betrachter nicht durch die opake Materialphase hindurchblicken kann. Die Transmission der opaken Materialphase im sichtbaren Spektralbereich ist also deutlich herabgesetzt und beträgt kleiner 5 %, insbesondere etwa 0%.

Die opake Materialphase enthält bevorzugt zumindest Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, Acrylnitril-Butadien-Styrol (ABS), Styrol-Acrylnitril (SAN), Acrylester-Styrol-Acrylnitril (ASA), Acrylnitril-Butadien-Styrol - Polycarbonat (ABS/PC) und / oder Copolymere oder Gemische davon, besonders bevorzugt Polycarbonate (PC), Polyethylenterephthalat (PET) und / oder Polymethylmethacrylat (PMMA).

Die opake Materialphase enthält bevorzugt zumindest ein Farbmittel. Durch das Farbmittel wird die Opazität der Komponente erreicht. Das Farbmittel kann anorganische und / oder organische Farbstoffe und / oder Pigmente enthalten. Das Farbmittel kann bunt oder unbunt sein. Geeignete Farbmittel sind dem Fachmann bekannt und können beispielsweise im Colour Index der British Society of Dyers and Colourists und der American Association of Textile Chemists and Colorists nachgeschlagen werden. Bevorzugt wird ein Schwarz-Pigment als Farbmittel verwendet, beispielsweise Pigmentruß (Carbon Black), Anilinschwarz, Beinschwarz, Eisenoxidschwarz, Spinellschwarz und / oder Graphit. Dadurch wird eine schwarze opake Komponente erreicht.

Die opake Materialphase enthält anorganische oder organische Füllstoffe, besonders bevorzugt SiO₂, Al₂O₃, TiO₂, Tonmineralien, Silikate, Zeolithe, Glasfasern, Kohlenstofffasern, Glaskugeln, organische Fasern und/oder Gemische davon enthalten. Die Füllstoffe können die Stabilität der opaken Komponente weiter erhöhen. Zudem können die Füllstoffe den Anteil an polymeren Materialien verringern und so die Herstellungskosten des Bauteils vermindern.

Bevorzugt enthält das extrudierte Dichtungsprofil thermoplastische Elastomere, thermoplastische Polyurethane, Styrol-Copolymere, Polyolefin-Gummi-Blends, Polyolefin-Elastomer-Blends, thermoplastische Copolyamide, thermoplastische Copolyester und / oder Gemische davon. Mit diesen Materialien lässt sich eine besonders gute Abdichtung erzielen bei gleichzeitig guten Extrusionseigenschaften.

Der polymere Grundkörper weist bevorzugt ein Dicke von 2 mm bis 6 mm auf. Das ist besonders vorteilhaft im Hinblick auf die Festigkeit und die Verarbeitung des polymeren Grundkörpers. Die Größe des polymeren Grundkörpers kann breit variieren und richtet sich nach der erfindungsgemäßen Verwendung.

Der polymere Grundkörper enthält bevorzugt zumindest Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, Acrylnitril-Butadien-Styrol (ABS), Styrol-Acrylnitril (SAN), Acrylester-Styrol-Acrylnitril (ASA), Acrylnitril-Butadien-Styrol - Polycarbonat (ABS/PC) und / oder Copolymere oder Gemische davon.

Der polymere Grundkörper enthält besonders bevorzugt Polycarbonate (PC) und / oder Polymethylmethacrylat (PMMA). Das ist besonders vorteilhaft im Hinblick auf die Transparenz im transparenten Bereich, die Verarbeitung, die Festigkeit, die Witterungsbeständigkeit und die chemische Beständigkeit des polymeren Grundkörpers.

Die Schutzbeschichtung schützt die polymere Scheibe vor mechanischer und chemischer Beschädigung sowie UV-Strahlung. Bevorzugt werden thermisch härtende oder UVhärtende Lacksysteme auf Basis von Polysiloxanen, Polyacrylaten, Polymethacrylaten und / oder Polyurethanen verwendet. Die Schutzbeschichtung hat bevorzugt eine Schichtdicke von 1 µm bis 50 µm, besonders bevorzugt von 2 µm bis 25 µm. Das ist besonders vorteilhaft im Hinblick auf die schützende Wirkung der Beschichtung.

Die Beschichtung kann neben farbgebenden Verbindungen und Pigmenten auch UV-Blocker, Konservierungsstoffe sowie Komponenten zur Erhöhung der Kratzfestigkeit, beispielsweise Nanopartikel enthalten.

Die Schutzbeschichtung wird nach dem Aufbringen bevorzugt über Temperatur und / oder UV-Licht-Eintrag ausgehärtet. Als Schutzbeschichtung geeignete Produkte sind beispielsweise AS4000, AS4700, Varianten des PHC587 oder UVHC3000, die von der Firma Momentive Performance Materials bereitgestellt werden.

Vor der Schutzbeschichtung wird bevorzugt eine haftvermittelnde Schicht auf den polymeren Grundkörper aufgebracht. Die haftvermittelnde Schicht kann beispielsweise Acrylate enthalten und eine Schichtdicke von 0,4 µm bis 5 µm aufweisen. Die Schutzbeschichtung kann beispielsweise Polysiloxane enthalten und eine Schichtdicke von 1 µm bis 15 µm aufweisen.

Die Aufgabe der vorliegenden Erfindung wird weiter erfindungsgemäß durch ein Verfahren zur Herstellung einer erfindungsgemäßen polymeren Scheibe gelöst, wobei zumindest:
- ein polymerer Grundkörper bereitgestellt wird,
- eine Schutzbeschichtung mindestens auf der zweiten Scheibenfläche aufgebracht wird,
- ein Haftvermittler auf die erste Scheibenfläche in dem für das Dichtungsprofil vorgesehenen Bereich auf der opaken Materialphase aufgebracht wird und
- ein Dichtungsprofil auf dem Haftvermittler extrudiert wird.

Der polymere Grundkörper kann durch alle geeigneten, dem Fachmann bekannten Methoden zur Kunststoffverarbeitung hergestellt werden, beispielsweise über thermische Umformung eines polymeren Plattenmaterials in speziellen Thermoform-Werkzeugen. Der polymere Grundkörper kann alternativ in einem Ein- oder Mehrkomponenten-Spritzgussverfahren oder Ein- oder Mehrkomponenten-Spritzprägeverfahren, bevorzugt in Kombination mit Wendeplattentechnologie, bereitgestellt werden. Dabei werden ein oberes und ein unteres Spritzgusswerkzeug schlüssig gegeneinander geführt. Durch die beiden Spritzgusswerkzeuge wird eine Kavität ausgebildet. In die Kavität wird das aufgeschmolzene polymere Material eingespritzt. Nach Aushärten des polymeren Materials kann das polymere Werkstück den Spritzgusswerkzeugen entnommen werden. In einer bevorzugten Ausführung wird vor der Entnahme des polymeren Werkstücks in einem zusätzlichen Schritt eine weitere, meist dunkel eingefärbte, opake Materialphase an das Werkstück angespritzt. Die Form des polymeren Werkstücks entspricht der Form der von den Spritzgusswerkzeugen gebildeten Kavität.

Die Schutzbeschichtung kann durch Streichen und Rollen, Aufsprühen von Aerosolen, Pulverbeschichtung, Tauchlackierung und Flutbeschichtung von Lösungen, Emulsionen oder Suspensionen, sowie CVD (chemical vapor deposition) und PVD (physical vapor deposition) Verfahren aus der Gasphase aufgebracht werden. Die Schutzbeschichtung wird bevorzugt über Flutbeschichtung aufgebracht. Bei diesem Verfahren wird das Werkstück von der Oberkante an mit einer Beschichtungslösung beaufschlagt, beispielsweise mittels einer oder mehrerer fest montierter Flutdüsen, eines Lackvorhangs oder eines beweglichen Flutroboterarms. Die ablaufende Beschichtungslösung benetzt dabei das Werkstück. Verfahren zur Flutbeschichtung sind beispielsweise aus GB 1,097,461 A, GB 1,201,292 A und GB 2,123,841 A bekannt.

Diejenigen Bereiche des polymeren Grundkörpers, auf denen das extrudierte Dichtungsprofil angebracht werden soll, werden vor der Extrusion des Dichtungsprofils mit einem Haftvermittler (Primer) versehen. Einige dieser Haftvermittler müssen unmittelbar vor der Anextrusion des Dichtungsprofils auf eine Temperatur von ca. 50°C bis 120°C gebracht und damit hitzeaktiviert werden. Die Anextrusion erfolgt dann im noch warmen Zustand des Haftvermittlers. Bevorzugt werden Haftvermittler eingesetzt, die keine Hitzeaktivierung erfordern.

Um eine optimale Haftung des Dichtungsprofils auf dem polymeren Grundkörper zu erreichen, kann es erforderlich sein, diejenigen Bereiche des polymeren Grundkörpers, auf denen das Dichtungsprofil angebracht werden soll, vor der Aufbringung des Haftvermittlers zu aktivieren. Auf diese Weise wird die erste Scheibenoberfläche für die anschließende Auftragung des Haftvermittlers optimal vorbereitet. Hierfür können alle geeigneten, dem Fachmann bekannten Methoden zur Oberflächenaktivierung angewandt werden, beispielsweise Atmosphärenplasma, Beflammung, Koronabehandlung oder durch Auftragen eines flüssigen Aktivators. Bevorzugt wird mittels Atmosphärenplasma aktiviert. Insbesondere wenn die erste Scheibenfläche mit einer Schutzbeschichtung versehen ist, kann die Haftung des Dichtungsprofils durch eine zusätzliche Aktivierung deutlich verbessert werden.

Die Extrusion des Dichtungsprofils auf dem Haftvermittler erfolgt bevorzugt mithilfe eines Roboters, der entlang der Scheibenkante des feststehenden polymeren Grundkörpers bewegt wird und das Dichtungsprofil aus einer Düse auf der zweiten Scheibenfläche abscheidet. Die Vorschubgeschwindigkeit der Düse beträgt zwischen 50 mm/s und 300 mm/s, bevorzugt zwischen 100 mm/s und 200 mm/s. Alternativ kann der polymere Grundkörper entlang einer feststehenden Düse bewegt werden. Unabhängig von der geometrischen Form der polymeren Scheibe kann dasselbe Verfahren angewandt werden, sodass auch kleinere Stückzahlen kostengünstig hergestellt werden können.

Die polymere Scheibe wird bevorzugt als Scheibe, als Bestandteil einer Scheibe oder als Kunststoffabdeckung von Fortbewegungsmitteln für den Verkehr auf dem Lande, in der Luft oder zu Wasser verwendet, insbesondere als Heck-, Windschutz-, Seiten-, Dachscheibe, Leuchtenabdeckung, Zierleiste und / oder als Fahrzeugdach von Personenkraftwagen, Lastkraftwagen, Bussen, Straßenbahnen, U-Bahnen, Zügen und Motorrädern. Die polymere Scheibe kann auch in funktionalen und / oder dekorativen Einzelstücken oder als Einbauteil in Möbeln und Geräten verwendet werden.

Die Erfindung wird anhand von Figuren näher erläutert. Die Figuren zeigen jeweils eine schematische Darstellung und sind nicht maßstabsgetreu. Die Figuren schränken die Erfindung in keiner Weise ein. Es zeigen:
- Fig. 1: einen Querschnitt durch eine Ausgestaltung einer polymeren Scheibe im Bereich der Scheibenkante, welche nicht Teil der Erfindung ist,
- Fig. 2: einen Querschnitt durch eine weitere Ausgestaltung einer polymeren Scheibe im Bereich der Scheibenkante, welche nicht Teil der Erfindung ist,
- Fig. 3: einen Querschnitt durch eine Ausgestaltung einer erfindungsgemäßen polymeren Scheibe im Bereich der Scheibenkante,
- Fig. 4: einen Querschnitt durch eine weitere Ausgestaltung einer erfindungsgemäßen polymeren Scheibe im Bereich der Scheibenkante,
- Fig. 5: eine Aufsicht auf die erste Scheibenfläche einer erfindungsgemäßen polymeren Scheibe,
- Fig. 6: eine Aufsicht auf die zweite Scheibenfläche einer erfindungsgemäßen polymeren Scheibe,
- Fig. 7: eine Aufsicht auf die erste Scheibenfläche einer weiteren Ausgestaltung einer erfindungsgemäßen polymeren Scheibe,
- Fig. 8: ein Flussdiagramm des erfindungsgemäßen Verfahrens zur Herstellung einer polymeren Scheibe.

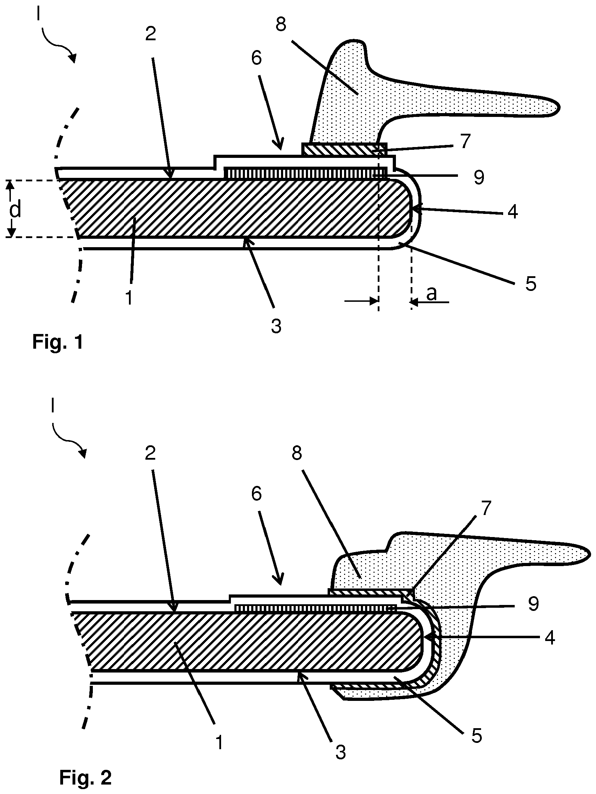

Fig. 1 zeigt einen Querschnitt durch eine durch Thermoformen hergestellte polymere Scheibe I im Bereich der Scheibenkante 4, welche nicht Teil der Erfindung ist. Die polymere Scheibe I ist eine Heckscheibe eines Kraftfahrzeugs. Der polymere Grundkörper 1 der polymeren Scheibe I enthält Poly-carbonat (PC) und ist transparent ausgeführt. Der polymere Grundkörper 1 weist eine erste Scheibenfläche 2, eine zweite Scheibenfläche 3 und eine Scheibenkante 4 auf. Die erste Scheibenfläche 2 und die zweite Scheibenfläche 3 sind parallel zueinander ausgeführt. Die Dicke d des polymeren Grundkörpers 1 beträgt 4 mm. Die zweite Scheibenfläche 3 ist als äußere Fläche der Heckscheibe vorgesehen. Sie ist daher besonderen mechanischen und chemischen Beanspruchungen sowie UV-Strahlung ausgesetzt. Die zweite Scheibenfläche 3 ist deshalb mit einer Schutzbeschichtung 5 versehen. Auch die erste Scheibenfläche 2 ist mit einer Schutzbeschichtung 5 versehen, da auch die zur Fahrzeuginnenseite gewandte Seite der Scheibe chemischen und mechanischen Beanspruchungen ausgesetzt ist, wie zum Beispiel Reinigungsmittel sowie Verkratzen durch Fahrzeuginsassen oder Gepäck-stücke, die in Kontakt mit der Scheibe kommen. Die Schutzbeschichtung 5 enthält Polysiloxane. Im Randbereich 6 des polymeren Grundkörpers 1 ist ein Schwarzdruck 9 über ein Siebdruckverfahren auf der ersten Scheibenfläche 2 angebracht. Der Randbereich 6 ist etwa 5 cm breit und verläuft parallel zur Scheibenkante 4. Der Schwarzdruck 9 ist direkt auf dem polymeren Grundkörper 1 angeordnet und wird durch die Schutzbeschichtung 5 geschützt. Der Schwarzdruck 9 verbirgt ein extrudiertes Dichtungsprofil 8 und einen Haft-vermittler 7 bei Blick auf die zweite Scheibenfläche 3 und verbessert so den optischen Eindruck der polymeren Scheibe I. Der Abstand a zwischen extrudiertem Dichtungsprofil 8 und der Scheibenkante 4 beträgt etwa 5 mm. Für die Bestimmung des Abstands a wird nur der Teil des extrudierten Dichtungsprofils 8 berücksichtigt, der mit dem Haftvermittler 7 in Kontakt steht. Der Abstand a wird dann ab dem Beginn des extrudierten Dichtungsprofils 8, von der Scheibenkante 4 her gesehen, bestimmt. Das extrudierte Dichtungsprofil 8 verläuft parallel zur Scheibenkante 4 und ragt über die Scheibenkante 4 hinaus. Wird die polymere Scheibe I in eine Fensteröffnung eingebaut, kann sich der über die Scheibenkante 4 hinaus-ragende Teil des Dichtungsprofils 8 um die Scheibenkante 4 legen und so für eine gute Abdichtung sorgen. Das extrudierte Dichtungsprofil 8 enthält ein thermoplastisches Elastomer. Das Dichtungsprofil 8 ist über einen Haftvermittler 7 angebracht. Der Haftver-mittler 7 enthält Polyurethane, chlorierte Polyolefine und ein wässriges Lösungsmittel. Der Haftvermittler stellt die Haftung auf der Schutzbeschichtung 5 sicher.

Figur 2 zeigt eine weitere Ausgestaltung einer polymeren Scheibe im Bereich der Scheibenkante, welche nicht Teil der Erfindung ist. Die dargestellte polymere Scheibe I entspricht in den Grund-zügen der in Figur 1 gezeigten Scheibe. Es ist ebenfalls ein Schwarzdruck 9 auf dem polymeren Grundkörper 1 geschützt durch die Schutzbeschichtung 5 angeordnet. Das extrudierte Dichtungsprofil 8 umfasst die Scheibenkante 4 und ist auf der ersten Scheiben-fläche 2, der zweiten Scheibenfläche 3 und der Scheibenkante 4 angeordnet. Das extrudierte Dichtungsprofil 8 ist über einen Haftvermittler 7 auf der Schutzbeschichtung 5 befestigt. Der Haftvermittler 7 verbessert die Haftung des extrudierten Dichtungsprofils 8 auf der Schutzbeschichtung. Da das extrudierte Dichtungsprofil 8 die Scheibenkante 4 einfasst, wird die Scheibenkante 4 optimal vor Beschädigung vor, während und nach dem Einbau in eine Fensteröffnung geschützt. Der Abstand a zwischen extrudiertem Dichtungsprofil 8 und Scheibenkante 4 ist 0 mm, da das extrudierte Dichtungsprofil 8 die Scheibenkante 4 umgreift.

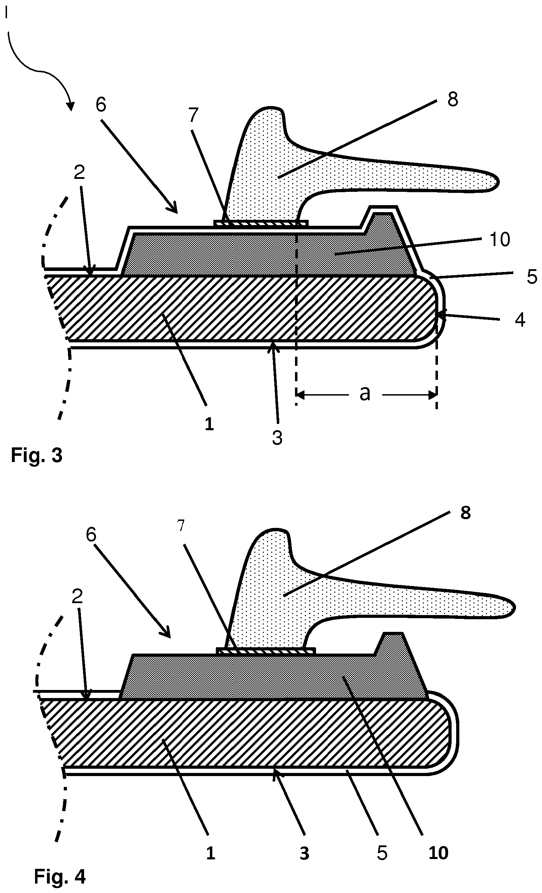

Figur 3 zeigt einen Querschnitt durch eine Ausgestaltung einer erfindungsgemäßen polymeren Scheibe im Bereich der Scheibenkante. Auf der ersten Scheibenfläche 2 des polymeren Grundkörpers 1 ist eine opake Materialphase 10 angeordnet. Der polymere Grundkörper 1 und die opake Materialphase 10 enthalten Polycarbonat. Die opake Materialphase 10 enthält zusätzlich ein Schwarz-Pigment als Farbmittel. Die opake Materialphase 10 verdeckt den Blick auf das dahinter liegende Dichtungsprofil 8, wenn man aus Richtung der zweiten Scheibenfläche 3 auf die polymere Scheibe I schaut. Zusätzlich trägt die opake Materialphase 10 zur Festigkeit der polymeren Scheibe I im Randbereich 6 bei. Die Dicke d des polymeren Grundkörpers 1 beträgt 4 mm, die Dicke der opaken Materialphase 10 beträgt 2 mm. Die opake Materialphase 10 ist in einem Randbereich 6 angeordnet. Der Randbereich 6 ist 4 cm breit und verläuft parallel zu der Scheibenkante 4. Der polymere Grundkörper 1 mit der opaken Materialphase 10 wird in einem Zweikomponenten-Spritzgussverfahren hergestellt. Dabei wird zunächst der polymere Grundkörper 1 in einem Spritzgusswerkzeug hergestellt und vor der Entnahme des polymeren Grundkörpers 1 wird die opake Materialphase 10 an den polymeren Grundkörper 1 in diesem Spritzgusswerkzeug angespritzt. Die gesamte erste Scheibenfläche 2 und die zweite Scheibenfläche 3 sind mit einer Schutzbeschichtung 5 versehen. Die opake Materialphase 10 ist durch die Schutzbeschichtung 5 geschützt. Das Dichtungsprofil 8 ist über den Haftvermittler 7 auf der Schutzbeschichtung 10 angebracht. Das Dichtungsprofil 8 verläuft parallel zur Scheibenkante 4. Der Abstand a zwischen dem Dichtungsprofil 8 und der Scheibenkante 4 beträgt 1,5 cm. Ein Teil des Dichtungsprofils 8 ragt über die Scheibenkante 4.

Figur 4 zeigt einen Querschnitt durch eine weitere Ausgestaltung einer erfindungsgemäßen polymeren Scheibe im Bereich der Scheibenkante. Die polymere Scheibe I entspricht in den Grundzügen der in Figur 3 dargestellten Scheibe. Die erste Scheibenfläche 2 ist nicht vollständig mit einer Schutzbeschichtung 5 versehen. Die opake Materialphase 10 ist frei von einer Schutzbeschichtung 5. Die Scheibenkante 4 und die zweite Scheibenfläche 3 sind vollständig durch die Schutzbeschichtung 5 geschützt. Die erste Scheibenfläche 2 ist nach Einbau in eine Fahrzeugöffnung für die Fahrzeuginnenseite vorgesehen. Die chemischen und mechanischen Belastungen sind daher geringer als auf der für die Außenseite vorgesehenen zweiten Scheibenfläche 3. Eine eventuelle optische Beeinträchtigung der opaken Materialphase 10 durch zum Beispiel Verkratzen ist nicht so nachteilhaft wie ein Verkratzen eines transparenten Durchsichtbereichs. Daher kann Schutzbeschichtung gespart werden, insbesondere bei einer großflächig angeordneten opaken Materialphase 10. Der Haftvermittler 7 ist direkt auf der opaken Materialphase 10 angeordnet. Der Haftvermittler 7 stellt eine gute Haftung des extrudierten Dichtungsprofils 8 auf der opaken Materialphase 10 sicher.

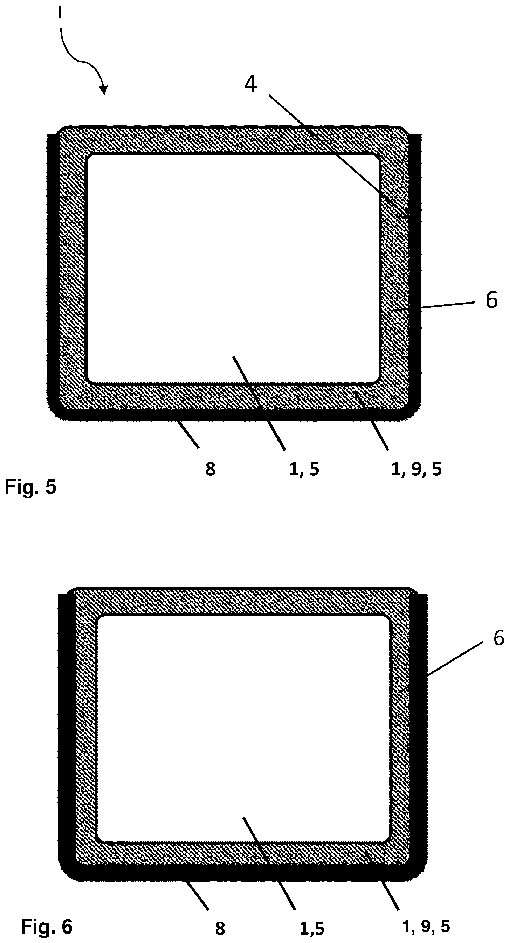

Figur 5 zeigt eine Aufsicht auf die zweite Scheibenfläche 3 einer erfindungsgemäßen polymeren Scheibe I. Die polymere Scheibe I ist rechteckig ausgeführt und entlang von 3 Seiten der polymeren Scheibe I ist ein Dichtungsprofil 8 angeordnet. Das Dichtungsprofil 8 ist ausgeführt wie in Figur 1 gezeigt. Es ragt über die Scheibenkante 4 hinaus. Bei Aufsicht auf die zweite Scheibenfläche 3 ist nur der über die Scheibenkante 4 hinausragende Teil des Dichtungsprofils 8 sichtbar. Der polymere Grundkörper 1 ist transparent ausgeführt und mit einer Schutzbeschichtung 5 versehen. Im umlaufenden Randbereich 6 der Scheibe ist ein Schwarzdruck 9 angebracht, der ebenfalls durch die Schutzbeschichtung 5 geschützt ist. Der Schwarzdruck 9 verdeckt den Blick auf den auf der ersten Scheibenfläche 2 angebrachten Teil des extrudierten Dichtungsprofils 8.

Figur 6 zeigt eine Aufsicht auf die erste Scheibenfläche 2 einer erfindungsgemäßen polymeren Scheibe I. Es handelt sich um die in Figur 5 gezeigte polymere Scheibe I, die hier von der gegenüberliegenden Seite gezeigt ist. Bei Blick auf die erste Scheibenfläche 2 sind der die Scheibenkante 4 überragende Teil des Dichtungsprofils 8 und der auf der ersten Scheibenfläche 4 angebrachte Teil des Dichtungsprofils 8 sichtbar. Die gesamte erste Scheibenfläche ist mit einer Schutzbeschichtung versehen.

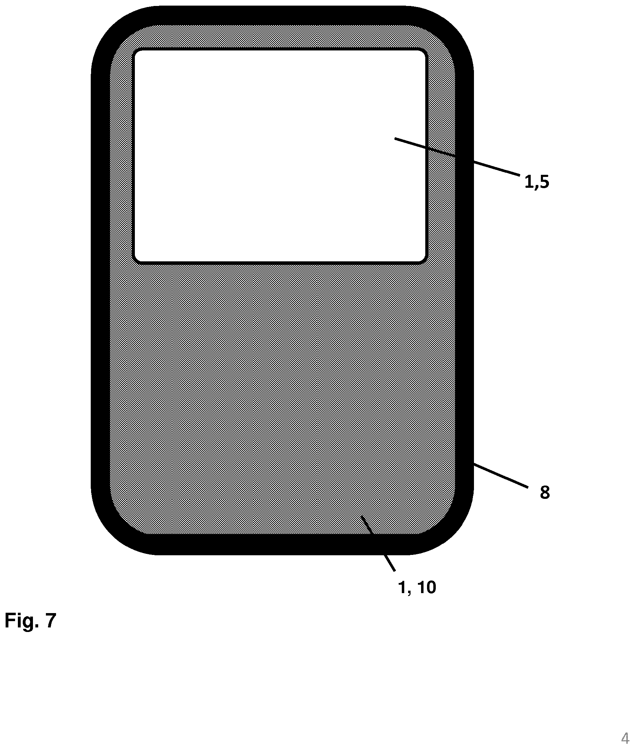

Figur 7 zeigt eine Aufsicht auf die erste Scheibenfläche 2 einer erfindungsgemäßen polymeren Scheibe. Die polymere Scheibe I ist als Dachscheibe für ein Fahrzeug vorgesehen. Der polymere Grundkörper 1 ist transparent ausgeführt. Der polymere Grundkörper 1 ist im Zweikomponenten-Spritzgussverfahren zusammen mit der opaken Materialphase 10 hergestellt. Die opake Materialphase 10 erstreckt sich über mehr als 50 % der Fläche des polymeren Grundkörpers 1. Die opake Materialphase 10 verbirgt zum Einen das Dichtungsprofil 8 und andere Objekte und verbessert so das optische Erscheinungsbild der polymeren Scheibe I bei Blick auf die zweite Scheibenfläche 2. Zum anderen verbessert die opake Materialphase 10 die Stabilität der polymeren Scheibe I. In dem Bereich, in dem keine opake Materialphase 10 angeordnet ist, befindet sich der Durchsichtbereich der Dachscheibe. In diesem Bereich ist eine Schutzbeschichtung 5 auf der ersten Scheibenfläche 2 angeordnet, damit der zum Fahrzeuginnenraum gewandte Teil der polymeren Scheibe I vor Verkratzen geschützt ist. Die opake Materialphase 10 ist in dieser Ausführungsform nicht mit einer Schutzbeschichtung 5 versehen, da dieser Bereich nach Einbau von dem Fahrzeughimmel verdeckt wird und somit keinen Schutz vor Verkratzen benötigt. Die gesamte zweite Scheibenfläche 3, die in Figur 7 nicht gezeigt ist, ist mit der Schutzbeschichtung 5 versehen, da die Fahrzeugaußenseite hohen mechanischen Belastungen ausgesetzt ist. Das Dichtungsprofil 8 ist wie in Figur 4 gezeigt direkt auf der opaken Materialphase 10 über einen Haftvermittler 7 angebracht. Das Dichtungsprofil 8 ist in diesem Fall umlaufend entlang der gesamten Scheibenkante 4 angeordnet und dient der Fixierung und Abdichtung der Scheibe in der Dachfensteröffnung.

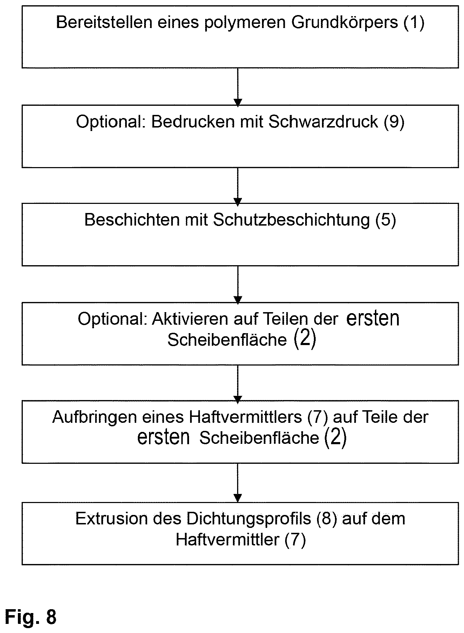

Figur 8 zeigt ein Flussdiagramm eines erfindungsgemäßen Verfahrens. Zunächst wird ein polymerer Grundkörper 1 bereitgestellt durch zum Beispiel ein Spritzgussverfahren. Optional kann der polymere Grundkörper 1 zum Beispiel über ein Siebdruckverfahren mit einem Schwarzdruck 9 versehen werden. Anschließend wird eine Schutzbeschichtung 5 zum Beispiel über ein Flutbeschichtungsverfahren aufgebracht, bevorzugt auf der ersten Scheibenfläche 2 und der zweiten Scheibenfläche 3. Anschließend können optional die Teile der ersten Scheibenfläche 2, auf denen das extrudierte Dichtungsprofil 8 angebracht werden soll, aktiviert werden. Dies geschieht bevorzugt mithilfe von Atmosphärenplasma. Auf dem aktivierten Bereich kann der Haftvermittler 7 aufgetragen werden, auf den dann das Dichtungsprofil 8 direkt extrudiert wird. Durch die direkte Extrusion wird eine besonders stabile Verbindung zwischen dem Dichtungsprofil 8 und der beschichteten ersten Scheibenfläche 2 erzeugt.

### Bezugszeichenliste

- I: polymere Scheibe

- 1: polymerer Grundkörper
- 2: erste Scheibenfläche
- 3: zweite Scheibenfläche
- 4: Scheibenkante
- 5: Schutzbeschichtung
- 6: Randbereich der Scheibe
- 7: Haftvermittler
- 8: extrudiertes Dichtungsprofil
- 9: Schwarzdruck
- 10: opake Materialphase

- a: Abstand zwischen Dichtungsprofil und Scheibenkante
- d: Dicke des polymeren Grundkörpers

## Patentansprüche

1. Polymere Scheibe (I), umfassend:
- einen polymeren Grundkörper (1) mit einer ersten Scheibenfläche (2), einer zweiten Scheibenfläche (3) und einer umlaufenden Scheibenkante (4),
- eine Schutzbeschichtung (5) auf der gesamten zweiten Scheibenfläche (3) und auf mindestens einem Teil der ersten Scheibenfläche (2),
**dadurch gekennzeichnet, dass** mindestens in einem Randbereich (6) der Scheibe auf der ersten Scheibenfläche (2) eine opake Materialphase (10) angebracht ist, wobei die opake Materialphase (10) anorganische oder organische Füllstoffe enthält, die die Stabilität der opaken Materialphase (10) erhöhen, und wobei zumindest auf der Seite der ersten Scheibenfläche (2) ein direkt anextrudiertes Dichtungsprofil (8) im Randbereich (6) der Scheibe auf der opaken Materialphase über einen Haftvermittler (7) angebracht ist.

2. Polymere Scheibe (I) nach Anspruch 1, wobei das Dichtungsprofil (8) parallel zur Scheibenkante (4) angebracht ist und der Abstand a des Dichtungsprofils (8) zur Scheibenkante (4) kleiner als 5 cm ist, bevorzugt kleiner als 2 cm, besonders bevorzugt kleiner als 0,5 cm ist.

3. Polymere Scheibe (I) nach Anspruch 2, wobei der Haftvermittler (7) und das extrudierte Dichtungsprofil (8) umlaufend entlang der gesamten Scheibenkante (4) angebracht sind.

4. Polymere Scheibe (I) nach Anspruch 2, wobei der Haftvermittler (7) und das extrudierte Dichtungsprofil (8) nur entlang eines Teils der Scheibenkante (4) angebracht sind.

5. Polymere Scheibe (I) nach einem der Ansprüche 1 bis 4, wobei das extrudierte Dichtungsprofil (8) so angebracht ist, dass es über die Scheibenkante (4) hinausragt.

6. Polymere Scheibe (I) nach einem der Ansprüche 1 bis 5, wobei das extrudierte Dichtungsprofil (8) die Scheibenkante (4) umgreifend auf der ersten Scheibenfläche (2) und der zweiten Scheibenfläche (3) angeordnet ist.

7. Polymere Scheibe (I) nach einem der Ansprüche 1 bis 6, wobei das extrudierte Dichtungsprofil (8) thermoplastische Elastomere, thermoplastische Polyurethane, Styrol-Copolymere, Polyolefin-Gummi-Blends, Polyolefin-Elastomer-Blends, thermoplastische Copolyamide, thermoplastische Copolyester und / oder Gemische davon enthält.

8. Polymere Scheibe (I) nach einem der Ansprüche 1 bis 7, wobei der Haftvermittler (7) Polyurethane, Epoxidharze, chlorierte Polyolefine und / oder Gemische davon enthält.

9. Verfahren zur Herstellung einer polymeren Scheibe (I) nach Anspruch 1, umfassend die Schritte
- Bereitstellen eines polymeren Grundkörpers (1) mit einer ersten Scheibenfläche (2), einer zweiten Scheibenfläche (3) und einer umlaufenden Scheibenkante (4), wobei mindestens in einem Randbereich (6) der Scheibe auf der ersten Scheibenfläche (2) eine opake Materialphase (10) angebracht ist, wobei die opake Materialphase (10) anorganische oder organische Füllstoffe enthält, die die Stabilität der opaken Materialphase (10) erhöhen,
- Aufbringen einer Schutzbeschichtung (5) auf der gesamten zweiten Scheibenfläche (3) und mindestens einem Teil der ersten Scheibenfläche (2),
- Aufbringen eines Haftvermittlers (7) auf die erste Scheibenfläche (2) in dem für das Dichtungsprofil (8) vorgesehenen Bereich im Randbereich (6) auf der opaken Materialphase (10) der Scheibe und
- direkte Extrusion des Dichtungsprofils (8) auf dem Haftvermittler (7) im Randbereich (6) der Scheibe, wobei das Dichtungsprofil (8) aus einer Düse auf die opake Materialphase (10) abgeschieden wird.

10. Verwendung einer polymeren Scheibe (I) nach einem der Ansprüche 1 bis 8 als Scheibe oder als Bestandteil einer Scheibe von Fortbewegungsmitteln für den Verkehr auf dem Lande, in der Luft oder zu Wasser, insbesondere als Heck-, Windschutz-, Seiten-, Dachscheibe, Leuchtenabdeckung, Zierleiste und / oder als Fahrzeugdach von Personenkraftwagen, Lastkraftwagen, Bussen, Straßenbahnen, U-Bahnen, Zügen und Motorrädern.

## Claims

1. Polymeric pane (I), comprising:
- a polymeric main body (1) with a first pane surface (2), a second pane surface (3), and a peripheral pane edge (4),
- a protective coating (5) on the entire second pane surface (3) and on at least part of the first pane surface (2),
**characterized in that** an opaque material phase (10) is applied on the first pane surface (2) at least in the edge region (6) of the pane, wherein the opaque material phase (10) contains inorganic or organic fillers which increase the stability of the opaque material phase (10), and
wherein a directly extruded-on sealing profile (8) is mounted at least on the side of the first pane surface (2) in the edge region (6) of the pane on the opaque material phase (10) via an adhesion promoter (7).

2. Polymeric pane (I) according to claim 1, wherein the sealing profile (8) is mounted parallel to the pane edge (4) and the distance a from the sealing profile (8) to the pane edge (4) is less than 5 cm, preferably less than 2 cm, particularly preferably less than 0.5 cm.

3. Polymeric pane (I) according to claim 2, wherein the adhesion promoter (7) and the extruded sealing profile (8) are mounted peripherally along the entire pane edge (4).

4. Polymeric pane (I) according to claim 2, wherein the adhesion promoter (7) and the extruded sealing profile (8) are mounted only along part of the pane edge (4).

5. Polymeric pane (I) according to one of claims 1 through 4, wherein the extruded sealing profile (8) is mounted such that it protrudes beyond the pane edge (4).

6. Polymeric pane (I) according to one of claims 1 through 5, wherein the extruded sealing profile (8) is arranged on the first pane surface (2) and on the second pane surface (3) encompassing the pane edge (4).

7. Polymeric pane (I) according to one of claims 1 through 6, wherein the extruded sealing profile (8) contains thermoplastic elastomers, thermoplastic polyurethanes, styrene copolymers, polyolefin rubber blends, polyolefin elastomer blends, thermoplastic copolyamides, thermoplastic copolyesters, and / or mixtures thereof.

8. Polymeric pane (I) according to one of claims 1 through 7, wherein the adhesion promoter (7) contains polyurethanes, epoxy resins, chlorinated polyolefins, and / or mixtures thereof.

9. Method for producing a polymeric pane (I) according to claim 1, at least comprising the steps
- providing a polymeric main body (1) with a first pane surface (2), a second pane surface (3), and a peripheral pane edge (4), wherein an opaque material phase (10) is applied on the first pane surface (2) at least in the edge region (6) of the pane, wherein the opaque material phase (10) contains inorganic or organic fillers which increase the stability of the opaque material phase (10),
- applying of a protective coating (5) on the entire second pane surface (3) and on at least part of the first pane surface (2),
- applying of an adhesion promoter (7) on the first pane surface (2) in the region provided for the sealing profile (8) in the edge region (6) of the pane on the opaque material phase (10), and
- direct extrusion of the sealing profile (8) on the adhesion promoter (7) in the edge region (6) of the pane, wherein the sealing profile (8) is deposited on the opaque material phase (10)out of a nozzle.

10. Use of a polymeric pane (I) according to one of claims 1 through 8 as a pane or as a component of a pane of means of transportation for travel on land, in the air, or on water, in particular as a rear window, windshield, side window, roof panel, luminaire covering, molding, and / or as a vehicle roof of passenger cars, trucks, buses, streetcars, subways, trains, and motorcycles.

## Revendications

1. Vitre polymère (I), comprenant :
- un corps principal en polymère (1) avec une première surface de vitre (2), une deuxième surface de vitre (3) et un bord de vitre périphérique (4),
- un revêtement protecteur (5) sur toute la surface du deuxième vitrage (3) et sur au moins une partie de la première surface de vitre (2),
**caractérisé en ce qu'**une phase de matériau opaque (10) est appliquée sur la première surface de vitre (2) au moins dans la zone de bord (6) de la vitre, la phase de matériau opaque (10) contenant des charges inorganiques ou organiques qui augmentent la stabilité de la phase de matériau opaque (10), et
dans lequel un profilé d'étanchéité (8) directement extrudé est monté au moins sur le côté de la première surface de la vitre (2) dans la zone du bord (6) de la vitre sur la phase de matériau opaque (10) par l'intermédiaire d'un promoteur d'adhérence (7).

2. Vitre polymère (I) selon la revendication 1, dans laquelle le profilé d'étanchéité (8) est monté parallèlement au bord de la vitre (4) et la distance a du profilé d'étanchéité (8) au bord de la vitre (4) est inférieure à 5 cm, de préférence inférieure à 2 cm, en particulier de préférence inférieure à 0,5 cm.

3. Vitre polymère (I) selon la revendication 2, dans laquelle le promoteur d'adhérence (7) et le profilé d'étanchéité extrudé (8) sont montés sur la périphérie le long de tout le bord de la vitre (4).

4. Vitre polymère (I) selon la revendication 2, dans laquelle le promoteur d'adhérence (7) et le profilé d'étanchéité extrudé (8) sont montés seulement le long d'une partie du bord de la vitre (4).

5. Vitre polymère (I) selon l'une des revendications 1 à 4, dans laquelle le profilé d'étanchéité extrudé (8) est monté de telle sorte qu'il dépasse du bord de la vitre (4).

6. Vitre polymère (I) selon l'une des revendications 1 à 5, dans laquelle le profilé d'étanchéité extrudé (8) est disposé sur la première surface de la vitre (2) et sur la deuxième surface de la vitre (3) qui entoure le bord de la vitre (4).

7. Vitre polymère (I) selon l'une des revendications 1 à 6, dans laquelle le profilé d'étanchéité extrudé (8) contient des élastomères thermoplastiques, des polyuréthanes thermoplastiques, des copolymères de styrène, des mélanges de caoutchouc de polyoléfine, des mélanges d'élastomères de polyoléfine, des copolyamides thermoplastiques, des copolyesters thermoplastiques et/ou des mélanges de ceux-ci.

8. Vitre polymère (I) selon l'une des revendications 1 à 7, dans laquelle le promoteur d'adhérence (7) contient des polyuréthanes, des résines époxy, des polyoléfines chlorées, et/ou des mélanges de ceux-ci.

9. Procédé de fabrication d'un panneau polymère (I) selon la revendication 1, comprenant au moins les étapes suivantes
- fournir un corps principal polymère (1) avec une première surface de vitre (2), une deuxième surface de vitre (3) et un bord de vitre périphérique (4), dans lequel une phase de matériau opaque (10) est appliquée sur la première surface de vitre (2) au moins dans la zone de bord (6) de la vitre, dans lequel la phase de matériau opaque (10) contient des charges inorganiques ou organiques qui augmentent la stabilité de la phase de matériau opaque (10),
- application d'un revêtement protecteur (5) sur toute la surface de la deuxième surface de vitre (3) et sur au moins une partie de la première surface de vitre (2),
- application d'un promoteur d'adhérence (7) sur la première surface de vitre (2) dans la zone prévue pour le profilé d'étanchéité (8) dans la zone du bord (6) de la vitre sur la phase de matériau opaque (10), et
- extrusion directe du profilé d'étanchéité (8) sur le promoteur d'adhérence (7) dans la zone du bord (6) de la vitre, le profilé d'étanchéité (8) étant déposé sur la phase de matière opaque (10) à partir d'une buse.

10. Utilisation d'une vitre polymère (I) selon l'une des revendications 1 à 8 comme vitre ou comme composant d'une vitre de moyen de transport pour les déplacements sur terre, dans les airs ou sur l'eau, en particulier comme vitre arrière, pare-brise, vitre latérale, panneau de toit, revêtement de luminaire, moulure et/ou comme toit de véhicule de voitures particulières, camions, bus, tramways, métros, trains et motocyclettes.
